# FASCICULE DE BREVET EUROPEEN

(11) **EP 3 999 820 B1**
(45) Date de publication et mention de la délivrance du brevet: **09.10.2024**
(21) Numéro de dépôt: 20740595.2
(22) Date de dépôt: 13.07.2020
(51) Int. Cl.: G01J 1/42

(54) **DISPOSITIF DE DÉTECTION D'IMPULSIONS OPTIQUES**
VORRICHTUNG ZUR DETEKTION VON OPTISCHEN IMPULSEN
DEVICE FOR DETECTING OPTICAL PULSES

(30) Priorité: 15.07.2019 FR 1907909
(43) Date de publication de la demande: 25.05.2022
(73) Titulaire: THALES, 92400 Courbevoie (FR)
(72) Inventeur: PERRUCHOT, Ludovic, 78995 ELANCOURT CEDEX (FR); MIDAVAINE, Thierry, 78995 ELANCOURT CEDEX (FR); BLOOM, Guillaume, 78995 ELANCOURT CEDEX (FR); ACHART, Jérôme, 78995 ELANCOURT CEDEX (FR); THILLOT, Marc, 78995 ELANCOURT CEDEX (FR); PERROT, Tugdual, 78995 ELANCOURT CEDEX (FR); LIGERET, Vincent, 78995 ELANCOURT CEDEX (FR)
(74) Mandataire: Lavoix
(86) Numéro de dépôt international: PCT/EP2020/069754
(87) Numéro de publication internationale: WO 2021/009122

(56) Documents cités:
- EP-A1- 1 361 613
- EP-A1- 2 911 092
- DE-A1- 102016 011 913
- US-A- 5 280 167
- US-A1- 2017 370 677
- US-B2- 8 004 665
- US-B2- 9 310 490

## Description

La présente invention concerne un dispositif de détection d'impulsions optiques. L'invention concerne, également, un système optronique comprenant un tel dispositif de détection.

Les systèmes optroniques sont classiquement équipés de fonctions de détection d'impulsions optiques, notamment d'impulsions laser.

La détection d'impulsions laser au moyen de tels systèmes optroniques est soumise à de nombreuses problématiques. En particulier, l'une des problématiques consiste à diminuer le taux de fausses alarmes (causées, par exemple, par les flux parasites solaires) tout en permettant une localisation angulaire précise de la source d'émission.

Une solution existante consiste à utiliser des détecteurs quatre quadrants qui présentent une grande bande passante, ce qui permet avec un filtrage adapté de détecter des impulsions de très courte durée, typiquement des impulsions laser, les événements plus lents étant rejetés. Néanmoins, de tels détecteurs quatre quadrants présentent une sensibilité limitée liée au bruit de jour (surtout pour des grands champs) et ont une localisation peu précise (en dehors du centre du détecteur).

Une autre solution consiste à utiliser des détecteurs matriciels d'imagerie qui ont une bonne localisation (position du pixel dans la matrice). Cependant, du fait de leurs temps d'intégration long (quelques millisecondes), ces détecteurs ne permettent pas de distinguer des événements très courts (de quelques nanosecondes) dus à des impulsions laser, d'événements plus longs notamment dus à des réflexions solaires, ce qui génère de nombreuses fausses alarmes.

Le document EP1361613 A1 divulgue un détecteur d'impulsion laser de l'état de la technique.

Il existe donc un besoin pour un dispositif de détection d'impulsions optiques permettant de détecter de manière fiable des impulsions de courtes durées, typiquement de l'ordre de la dizaine de nanosecondes, tout en permettant une localisation angulaire précise de la source d'émission.

A cet effet, la présente description a pour objet un dispositif de détection d'impulsions optiques, avantageusement d'impulsions laser, chaque impulsion optique ayant une largeur d'impulsion, le dispositif comprenant un capteur comportant une pluralité de pixels, chaque pixel comprenant :
- un récepteur configuré pour recevoir des impulsions optiques et pour générer un signal électrique ayant des variations représentatives des impulsions optiques reçues, chaque variation du signal électrique ayant une fréquence dans le domaine fréquentiel dépendant de la largeur d'impulsion de l'impulsion correspondant à ladite variation,
- une unité de détection d'événements comprenant au moins un filtre fréquentiel, le ou au moins un filtre fréquentiel ayant au moins une fréquence de coupure réglable, la fréquence de coupure de chaque filtre définissant une bande passante pour l'unité de détection d'événements, la bande passante ayant une borne inférieure et une borne supérieure, la fréquence de coupure réglable du ou chaque filtre étant réglé de sorte que la borne supérieure est supérieure ou égale à 1 Mégahertz, l'unité de détection d'événements étant configurée pour détecter au cours du temps les variations dans le signal électrique généré par le récepteur seulement lorsque la fréquence dans le domaine fréquentiel desdites variations est comprise dans la bande passante de l'unité de détection d'événements, et
- une unité de chronométrie configurée pour dater chaque variation du signal électrique détectée par l'unité de détection d'événements.

Selon d'autres aspects avantageux, le dispositif de détection comprend une ou plusieurs des caractéristiques suivantes, prises isolément ou suivant toutes les combinaisons techniquement possibles :
- la ou chaque fréquence de coupure réglable est réglée en fonction d'une tension de réglage appliquée au filtre fréquentiel correspondant, le réglage étant avantageusement effectué lors de la conception du dispositif de détection ;
- chaque unité de détection d'événements comprend au moins un filtre fréquentiel passe-bas à une première fréquence de coupure réglable et un filtre fréquentiel passe-haut à une deuxième fréquence de coupure réglable, les tensions de réglage appliquées à chaque filtre étant telles que la première fréquence de coupure soit la borne supérieure de la bande passante de l'unité de détection d'événements et la deuxième fréquence de coupure soit la borne inférieure de la bande passante de l'unité de détection d'événements ;
- pour chaque pixel, la fréquence de coupure réglable du ou chaque filtre de l'unité de détection d'évènements est réglé de sorte que la borne inférieure de la bande passante est supérieure ou égale à 100 kilohertz, de préférence supérieure ou égale à 1 Mégahertz ;
- le récepteur est configuré pour générer un signal électrique seulement lorsque la longueur d'onde des impulsions optiques reçues est comprise entre 380 nanomètres et 1,7 micromètres ;
- le dispositif comprend au moins un filtre spectral en amont du capteur, le filtre spectral étant centré sur une longueur d'onde d'intérêt, avantageusement le filtre spectral ayant une fenêtre de transmission de largeur supérieure ou égale à 30 nanomètres ou supérieure ou égale à 100 nanomètres ;
- chaque impulsion optique est reçue sur le capteur sous la forme d'une tâche, le dispositif comprenant une unité de contrôle de la taille et de la forme de la tâche de sorte que la tâche s'étende sur au moins deux pixels adjacents du capteur, avantageusement sur au moins quatre pixels adjacents du capteur, chaque pixel comprenant une unité de mesure des variations du signal électrique détectées par l'unité de détection d'événements correspondante, le dispositif comprenant, en outre, un calculateur configuré pour, le cas échéant, comparer la mesure effectuée par l'unité de mesure de chaque pixel sur lequel s'étend la tâche à un seuil prédéterminé et déterminer si l'impulsion optique reçue est ou non un bruit de mesure en fonction du résultat de la comparaison ;
- chaque impulsion optique est reçue sur le capteur sous la forme d'une tâche, le dispositif comprenant une unité de contrôle de la taille et de la forme de la tâche de sorte que la tâche s'étende sur au moins deux pixels adjacents du capteur, avantageusement sur au moins quatre pixels adjacents du capteur, chaque pixel comprenant une unité de mesure des variations du signal électrique détectées par l'unité de détection d'événements correspondante, les pixels du capteur étant regroupés en ensemble, chaque ensemble comprenant au moins un premier pixel et un deuxième pixel, adjacent au premier pixel, chaque premier pixel comprenant un filtre interférentiel propre à transmettre seulement une première bande spectrale, la première bande spectrale étant une bande spectrale d'intérêt centrée sur une longueur d'onde d'intérêt, chaque deuxième pixel comprenant un filtre propre à transmettre seulement une deuxième bande spectrale, la deuxième bande spectrale étant différente de la première bande spectrale, la deuxième bande spectrale étant une bande spectrale de référence choisie dans le groupe constitué de :
   - une bande spectrale centrée sur une longueur d'onde différente de la ou chaque longueur d'onde d'intérêt,
   - une bande spectrale disjointe de la ou chaque bande spectrale d'intérêt, et
   - une bande spectrale dans laquelle au moins une bande spectrale d'intérêt est strictement inclue,
   le dispositif comprenant un calculateur propre à comparer, le cas échéant, les mesures réalisées par l'unité de mesure de chacun du premier et du deuxième pixel et à classifier l'impulsion optique reçue en fonction du résultat de la comparaison ;
- au moins une longueur d'onde d'intérêt est comprise entre 1,05 micromètres et 1,07 micromètres ou entre 1,50 micromètres et 1,70 micromètres, de préférence entre 1,55 micromètres et 1,65 micromètres.

L'invention concerne, également, un système optronique comprenant un dispositif de détection tel que décrit précédemment.

D'autres caractéristiques et avantages de l'invention apparaîtront à la lecture de la description qui suit de modes de réalisation de l'invention, donnés à titre d'exemple uniquement et en référence aux dessins qui sont :
- [Fig 1], figure 1, une représentation schématique d'un exemple d'une source lumineuse et d'un système optronique comprenant un dispositif de détection,
- [Fig 2], figure 2, une représentation schématique d'un exemple d'éléments d'un dispositif de détection, à savoir : un capteur, une unité de contrôle de la taille et de la forme d'une tâche sur le capteur et un filtre spectral,
- [Fig 3], figure 3, un exemple d'une représentation fonctionnelle des éléments d'un pixel d'un capteur d'un dispositif de détection,
- [Fig 4], figure 4, un exemple d'un diagramme de Bode des filtres fréquentiels de la figure 3 après application de tensions de réglage aux filtres,
- [Fig 5], figure 5, une représentation schématique d'un exemple d'éléments d'un dispositif de détection, à savoir : un capteur et une unité de contrôle de la taille et de la forme d'une tâche sur le capteur, et
- [Fig 6], figure 6, une représentation schématique d'un exemple d'un capteur d'un dispositif de détection recevant une impulsion optique sous la forme d'une tâche. La figure 1 illustre une source lumineuse 12 et un système optronique 13 comprenant un dispositif de détection 14.

La source lumineuse 12 est propre à émettre des impulsions optiques notamment dans la direction du système optronique 13. Les impulsions optiques émises par la source lumineuse 12 présentent une bande spectrale d'émission BI. Chaque impulsion optique présente une largeur d'impulsion (aussi appelée durée d'impulsion). Dans la suite de la description, le terme « impulsion optique » désigne des impulsions au sens large, c'est-à-dire aussi bien dans le domaine visible, que infra-rouge ou ultraviolet.

La source lumineuse 12 est, par exemple, un émetteur laser ou une source large bande, telle que le soleil.

Le système optronique 13 est configuré pour détecter soit directement, soit indirectement les impulsions optiques émises dans sa direction.

Le système optronique 13 est, par exemple, un télémètre laser, un pointeur, un désignateur laser, un détecteur de tâche laser, un détecteur de pointeurs laser, un détecteur d'alerte laser ou un système de guidage de missiles (en anglais « beamriders »).

Avantageusement, le système optronique 13 et la source lumineuse 12 évoluent en milieu extérieur sur une même scène. Une scène désigne un théâtre d'opérations, c'est-à-dire le lieu où se déroule une action. La scène est donc un espace étendu avec des dimensions suffisantes pour permettre le déroulement d'une action.

Le système optronique 13 est, par exemple, destiné à être intégré dans une plateforme, telle que la plateforme d'un aéronef ou un véhicule terrestre.

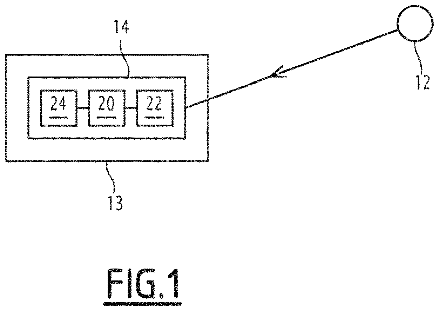

Dans l'exemple illustré par la figure 1, le dispositif de détection 14 comprend un capteur 20, une unité de contrôle 22 et un calculateur 24.

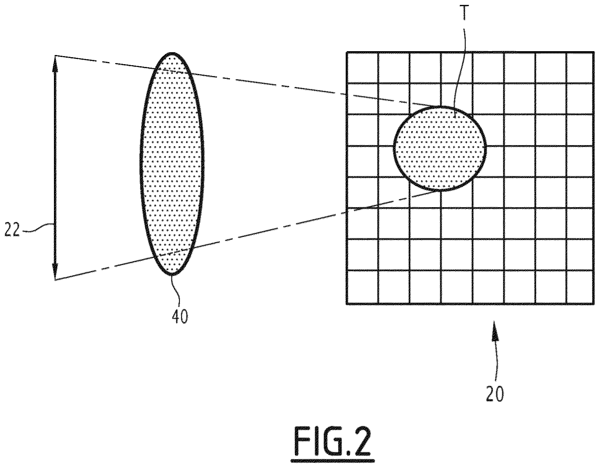

Le capteur 20 est propre à recevoir des impulsions optiques, notamment des impulsions optiques émise par la source lumineuse 12. Comme visible sur la figure 2, l'impulsion optique est reçue sur le capteur 20 sous la forme d'une tâche T.

Le capteur 20 est un capteur matriciel, c'est-à-dire un capteur formé d'une matrice de pixels. La matrice de pixels est configurée de sorte que chaque signal soit reçu sur un nombre de pixels de la matrice de pixels strictement inférieur au nombre total de pixels de la matrice de pixels. Typiquement, chaque pixel de la matrice est associé à une direction. Ainsi, cela permet la détermination de la direction de chaque signal reçu par la matrice de pixels.

Avantageusement, les pixels du capteur 20 sont indépendants les uns des autres. Par le terme « indépendant », il est entendu que chaque pixel est configuré pour fonctionner de manière autonome, sans tenir compte des impulsions optiques reçues par les autres pixels.

Avantageusement, le capteur 20 est un capteur à détection d'évènements. Un tel capteur, utilisé classiquement pour la compression de flux vidéo, a été adapté pour la détection d'impulsions optiques comme cela est décrit dans ce qui suit.

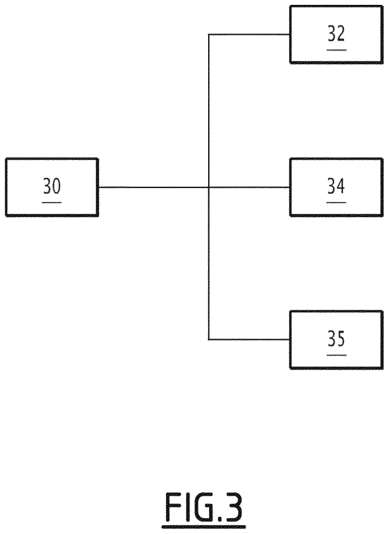

Comme illustré par la figure 3, au moins un pixel du capteur 20 comprend un récepteur 30, une unité de détection d'événements 32 et une unité de chronométrie 34. De préférence, chaque pixel du capteur 20 comprend un tel récepteur 30, une telle unité de détection d'événements 32 et une telle unité de chronométrie 34, tels qu'illustrés en figure 3. Avantageusement, chaque pixel du capteur 20 comprend, en outre, une unité de mesure 35 illustrée en figure 3.

Le récepteur 30 est configuré pour recevoir des impulsions optiques et générer un signal électrique fonction des impulsions optiques reçues. Le signal électrique présente notamment des variations représentatives des impulsions optiques reçues. En particulier, chaque variation du signal électrique a une fréquence dans le domaine fréquentiel dépendant de la largeur d'impulsion de l'impulsion correspondant à ladite variation. Le terme « domaine fréquentiel » est à comprendre par opposition à « domaine temporel », le passage d'un signal dans le domaine temporel au signal correspondant dans le domaine fréquentiel se faisant par application d'une transformée de Fourier au signal dans le domaine temporel. Ainsi, un signal dans le domaine fréquentiel a une fréquence ou distribution de fréquences dépendant de la largeur du signal correspondant dans le domaine temporel. Il sera compris que dans la présente description, le terme « fréquence dans le domaine fréquentiel » est à comprendre au sens large et peut aussi désigner une distribution de fréquences. Par ailleurs, il sera également compris que les variations considérées du signal électrique sont les variations correspondant à des impulsions optiques.

Le récepteur 30 est, par exemple, une photodiode.

De préférence, le récepteur 30 est configuré pour générer un signal électrique seulement lorsque la longueur d'onde des impulsions optiques reçues est comprise entre 1 micromètre et 1,7 micromètres. Le récepteur 30 est alors adapté pour détecter de telles longueurs d'onde. En effet, pour certaines applications de détection, les longueurs d'onde d'intérêt sont :
- comprises entre 1,05 µm et 1,07 µm, avantageusement égales à 1,064 µm, et/ou
- comprises entre 1,50 µm et 1,70 µm, de préférence entre 1,55 µm et 1,65 µm.

L'unité de détection d'événements 32 est configurée pour détecter une variation dans le signal électrique généré par le récepteur 30. Une variation signifie que le pixel correspondant est éclairé à l'instant présent (instant de la réception) de manière différente de l'instant précédent. Une telle variation peut notamment s'expliquer par la réception sur le capteur 20 d'une impulsion optique en provenance d'un laser.

La variation est détectable seulement lorsque la fréquence dans le domaine fréquentiel desdites variations est comprise dans la bande passante de l'unité de détection d'événements 32. La bande passante de l'unité de détection 32 comprend une borne inférieure (en fréquence) et une borne supérieure (en fréquence), la borne inférieure étant strictement inférieure à la borne supérieure.

L'unité de détection d'événements 32 comprend au moins un filtre fréquentiel. Par le terme « filtre fréquentiel », il est entendu un filtre configuré pour filtrer un signal en fonction de la fréquence dudit signal dans le domaine fréquentiel.

Chaque filtre fréquentiel est, de préférence, un filtre analogique.

Au moins un filtre fréquentiel présente au moins une fréquence de coupure réglable. Par le terme « réglable », il est entendu que la fréquence de coupure est modifiable, le réglage étant effectué soit lors de la conception du dispositif de détection 14 (dans ce cas, une fois le réglage effectué, celui-ci n'est plus modifiable), soit lors de l'utilisation du dispositif de détection 14 (le réglage pouvant alors être effectué plusieurs fois au cours du temps). La fréquence de coupure réglable est, par exemple, fixée en fonction d'une tension de réglage appliquée au filtre. La fréquence de coupure de chaque filtre définit la bande passante de l'unité de détection d'événements 32.

Avantageusement, la tension de réglage, aussi appelée tension de polarisation, appliquée à chaque filtre est telle que la borne supérieure de la bande passante de l'unité de détection 32 est supérieure ou égale à 1 Mégahertz (MHz), de préférence supérieure ou égale à 10 MHz (tout en restant inférieure à la borne supérieure). L'unité de détection 32 est alors adaptée pour détecter des variations du signal électrique correspondant à des impulsions optiques courtes, typiquement de l'ordre de la dizaine de nanosecondes.

De préférence, la tension de réglage appliquée à chaque filtre est telle que la borne inférieure de la bande passante de l'unité de détection 32 est supérieure ou égale à 100 kilohertz (kHz), de préférence supérieure ou égale à 1 MHz. L'unité de détection 32 est alors adaptée pour ne pas détecter des variations du signal électrique correspondant à des impulsions relativement longues, typiquement supérieures à la microseconde.

De préférence, la tension de réglage appliquée à chaque filtre est telle que la bande passante de l'unité de détection d'événements 32 s'étend sur au plus 10 MHz.

Ainsi, l'unité de détection d'événements 32 est configurée pour détecter des variations du signal électrique correspondant à des impulsions courtes, typiquement de l'ordre de la dizaine de nanosecondes, sans tenir compte des impulsions de durée plus longue, typiquement supérieures à la microseconde.

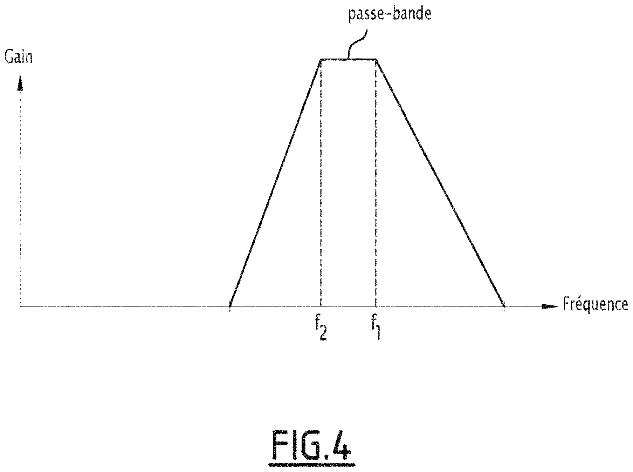

Dans l'exemple illustré par la figure 4, chaque unité de détection d'événements 32 comprend au moins un filtre fréquentiel passe-bas à une première fréquence de coupure f1 réglable et un filtre fréquentiel passe-haut à une deuxième fréquence de coupure f2 réglable.

Dans un fonctionnement classique de l'unité de détection d'événements 32 pour une application de compression de flux vidéo, les tensions de réglage appliquées à chaque filtre sont telles que la première fréquence de coupure f1 est strictement supérieure à la deuxième fréquence de coupure f2. La première fréquence de coupure f1 est typiquement de l'ordre de la dizaine de kilohertz. La deuxième fréquence de coupure f2 est de l'ordre de quelques Hz, typiquement 0 Hz. Une telle unité de détection 32 ne permet pas de détecter des variations du signal électrique correspondant à des impulsions courtes, typiquement de l'ordre de la dizaine de nanosecondes, sans tenir compte des impulsions de durée plus longue, typiquement inférieure à la microseconde.

Dans un fonctionnement adapté pour la détection d'impulsions optiques, notamment d'impulsions optiques de l'ordre de la dizaine de nanosecondes, les tensions de réglage appliquées à chaque filtre sont telles que les fréquences de coupure ont été adaptées pour la détection d'impulsions optiques. En particulier, la première fréquence de coupure f1 est strictement supérieure à la deuxième fréquence de coupure f2, ce qui est illustré par la figure 4. Les filtres fréquentiels passe-bas et passe-haut forment alors un filtre fréquentiel passe-bande. La première fréquence de coupure f1 est alors la borne supérieure de la bande passante de l'unité de détection d'événements 32 et la deuxième fréquence de coupure f2 est la borne inférieure de la bande passante de l'unité de détection d'événements 32. En conformité avec ce qui a été expliqué précédemment, la première fréquence de coupure f1 est typiquement supérieure ou égale à 1 MHz, de préférence supérieure ou égale à 10 MHz. La deuxième fréquence de coupure f2 est typiquement supérieure ou égale à 100 kHz, de préférence supérieure ou égale à 1 MHz.

L'unité de chronométrie 34 est configurée pour dater chaque variation du signal électrique détectées par l'unité de détection d'événements 32. L'unité de chronométrie affecte donc à chaque variation détectée la date de réception de l'impulsion optique correspondante. Cela permet dans le cas d'impulsions optiques périodiques de remonter à la fréquence de répétition des impulsions optiques, et ainsi d'en déduire des caractéristiques de la source d'émission.

L'unité de mesure 35 est configurée pour mesurer le signal électrique généré par le récepteur 30 lorsqu'une variation a été détectée par l'unité de détection d'événements 32. Une telle mesure est, par exemple, une mesure d'éclairement.

L'unité 22 de contrôle de la taille et de la forme de la tâche T est configurée pour contrôler la taille et la forme de la tâche T se formant sur le capteur 20 à partir de l'impulsion optique émise par la source lumineuse 12.

Avantageusement, l'unité de contrôle 22 est configurée pour que la tâche T s'étende sur au moins deux pixels adjacents du capteur 20, avantageusement sur au moins quatre pixels adjacents du capteur 20.

L'unité de contrôle 22 est, par exemple, un dispositif optique configuré pour défocaliser le flux lumineux reçu par le capteur 20. L'unité de contrôle 22 comprend, par exemple, une lentille optique (comme illustré par la figure 2) ou un diffuseur optique en amont du capteur 20.

Optionnellement, comme illustré par la figure 2, un filtre spectral 40 est disposé en amont des pixels du capteur 20. Le filtre spectral 40 est, par exemple, disposé en aval de l'unité de contrôle 20.

Le filtre spectral 40 est centré sur une longueur d'onde d'intérêt, c'est-à-dire une longueur d'onde que le dispositif de détection 14 est configuré pour détecter. La longueur d'onde d'intérêt est typiquement la longueur d'onde centrale de la bande spectrale du laser que l'on cherche à détecter.

Le filtre spectral 40 a, par exemple, une fenêtre de transmission de largeur supérieure ou égale à 30 nanomètres (typiquement pour un laser centré sur 1,06 µm) ou supérieure ou égale à 100 nanomètres (typiquement pour un laser centré sur 1,50 µm). Le calculateur 24 est, par exemple, un processeur. Le calculateur 24 comprend, par exemple, une unité de traitement de données, des mémoires, un lecteur de support d'informations et une interface homme/machine.

Dans l'exemple illustré par la figure 1, le calculateur 24 est porté par le système optronique 12. En variante, le calculateur 24 est déporté du système optronique 12 et est installé dans une entité qui est, par exemple, au sol. Cela permet de déporter les traitements effectués par le calculateur 24 en dehors du système optronique 12.

Par exemple, le calculateur 24 est en interaction avec un produit-programme d'ordinateur qui comporte un support d'informations. Le support d'informations est un support lisible par le calculateur 24, usuellement par l'unité de traitement de données du calculateur 24. Le support lisible d'informations est un médium adapté à mémoriser des instructions électroniques et capable d'être couplé à un bus d'un système informatique. A titre d'exemple, le support lisible d'informations est une disquette ou disque souple (de la dénomination anglaise *floppy disk*)*,* un disque optique, un CD-ROM, un disque magnéto-optique, une mémoire ROM, une mémoire RAM, une mémoire EPROM, une mémoire EEPROM, une carte magnétique ou une carte optique. Sur le support d'informations est mémorisé le produit-programme d'ordinateur comprenant des instructions de programme.

Le programme d'ordinateur est chargeable sur l'unité de traitement de données et est adapté pour entraîner la mise en oeuvre d'étapes visant à traiter les mesures effectuées par les pixels du capteur 20 lorsque le programme d'ordinateur est mis en oeuvre sur l'unité de traitement du calculateur 24.

Dans un autre exemple, le calculateur 24 est réalisé sous la forme d'un ou plusieurs composants logiques programmables, tel que des FPGA (de l'anglais *Field Programmable Gate Array*)*,* ou encore sous la forme d'un ou plusieurs circuits intégrés dédiés, tel que des ASIC (de l'anglais *Application Spécifie Integrated Circuit*)*.* Le calculateur 24 est dans ce cas configuré pour mettre en oeuvre les étapes visant à traiter les mesures effectuées par les pixels du capteur 20 comme cela sera décrit dans ce qui suit.

Le fonctionnement du dispositif de détection 14 va maintenant être décrit. Avantageusement, un tel fonctionnement a lieu à chaque instant, c'est-à-dire en temps réel.

Le capteur 20 reçoit au cours du temps des impulsions optiques. Chaque impulsion optique est reçue sous la forme d'une tâche T sur le capteur 20. Avantageusement, la tâche T s'étale sur au moins deux pixels adjacents, de préférence sur au moins quatre pixels adjacents du capteur 20 comme cela est illustré en figure 2.

Le récepteur 30 de chaque pixel recevant l'impulsion optique génère un signal électrique qui est fonction de l'impulsion optique reçue. En particulier, le signal électrique présente une variation représentative de l'impulsion optique reçue, la variation du signal électrique ayant une fréquence dans le domaine fréquentiel dépendant de la largeur d'impulsion de l'impulsion correspondant à ladite variation.

L'unité de détection d'événements 32 de chaque pixel recevant l'impulsion optique détecte toute variation dans le signal électrique généré par le récepteur 30 par rapport à l'instant précédent lorsque la fréquence dans le domaine fréquentiel du signal électrique est dans la bande passante de l'unité de détection d'événements 32.

Lorsqu'une variation a été détecté par l'unité de détection d'événements 32, l'unité de chronométrie 34 correspondante date chaque variation du signal électrique détectée par l'unité de détection d'événements 32.

Optionnellement, l'unité de mesure 35 mesure la variation détectée du signal.

Avantageusement, le calculateur 24 reçoit les mesures effectuées par chaque pixel et les compare à un seuil prédéterminé. En fonction du résultat des comparaisons, le calculateur 24 classifie l'impulsion optique comme étant ou non un bruit de mesure. Par exemple, si la valeur de la mesure est inférieure au seuil prédéterminé pour un nombre de pixels adjacents supérieur ou égal à un nombre prédéterminé (par exemple quatre), l'impulsion optique est considérée comme étant un bruit de mesure. Dans le cas contraire, l'impulsion optique est considérée comme étant en provenance d'une source lumineuse. Typiquement, il est considéré qu'une impulsion optique, différente d'un simple bruit de mesure, a été reçue sur le capteur 20 lorsque plusieurs pixels adjacents (par exemple 4) ont dépassé le seuil prédéterminé simultanément. Il est entendu par le terme « simultanément », dans une fenêtre temporelle contrainte, typiquement de l'ordre de la microseconde.

En outre, en fonction des pixels du capteur 20 ayant reçu l'impulsion optique, le calculateur 24 localise la source d'émission.

Ainsi, le dispositif de détection 14 décrit permet de détecter et de localiser des impulsions laser. En particulier, le dispositif de détection 14 est particulièrement adapté pour la détection d'impulsions de courtes durées (quelques dizaine de ns) et avec des longueurs d'onde précises (par exemple 1,06 µm ou 1,55 µm). Cela est rendu possible par la grande bande passante de l'unité de détection d'événements. Le filtrage adapté permet en outre d'axer la détection sur les longueurs d'onde d'intérêt.

Le dispositif de détection 14 permet notamment de détecter des impulsions laser avec une datation précise permettant de déterminer la fréquence de répétition des impulsions (y compris à très haute cadence) ou un code temporel. Le dispositif de détection 14 permet également de localiser précisément la provenance de telles impulsions laser. Le dispositif de détection 14 permet, également, de rejeter les impulsions ne correspondant pas à des impulsions laser, typiquement des impulsions de durée longue (supérieure à la microseconde). Enfin, le capteur matriciel 20 du dispositif de détection 14 est compatible avec la génération d'une image de la scène dans laquelle la localisation des impulsions optiques détectées serait incrustée.

En particulier, l'unité de détection 32 de chaque pixel (conçu à la base pour la compression de flux vidéo) a été configurée pour détecter des évènements extrêmement courts (quelques dizaines de nanosecondes) en modifiant les valeurs des filtres fréquentiels de l'unité de détection 32 (notamment passe-haut et passe-bas).

L'unité de contrôle de la taille et de la forme de la tâche T permet de ne retenir que les événements pour lesquels plusieurs pixels contigus (typiquement 4) ont dépassé le seuil prédéterminé simultanément dans une fenêtre temporelle contrainte. Cela permet de réduire encore les faux évènements et discriminer les faux évènements générés par le bruit du détecteur (intrinsèquement isolés spatialement et temporellement).

Ainsi, le dispositif de détection 14 permet de détecter de manière fiable des impulsions de courtes durée, notamment lasers et de les localiser précisément tout en rejetant les sources de fausse alarme potentielle (comme les reflets solaires par exemple) sur des critères temporels (notamment lorsque les durées des impulsions sont différentes des durées recherchées).

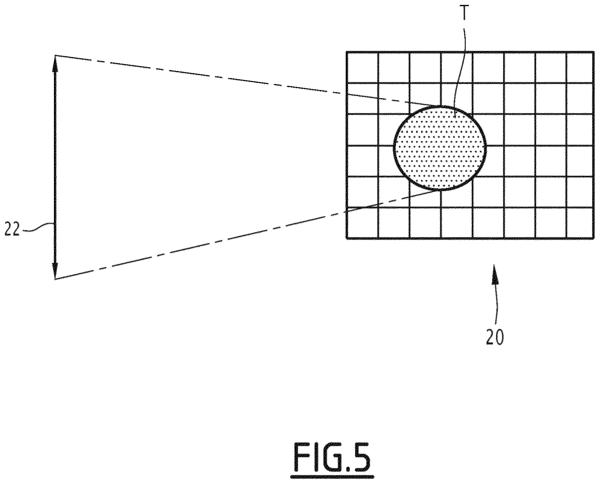

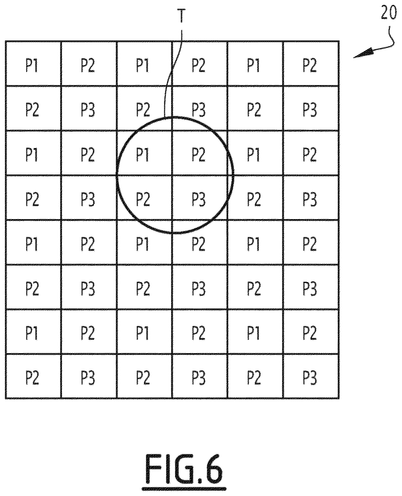

Un deuxième mode de réalisation du dispositif de détection 14, complémentaire du mode de réalisation décrit précédemment (premier mode de réalisation), est décrit en référence aux figures 5 et 6. Les éléments identiques au dispositif de détection 14 selon le premier mode de réalisation ne sont pas répétés. Seules les différences sont mises en évidence.

Les pixels du capteur 20 sont regroupés en ensembles. Chaque ensemble comprend, de préférence, un même nombre de pixels.

Chaque ensemble comprend au moins un premier pixel P1 et un deuxième pixel P2. Le deuxième pixel P2 est adjacent au premier pixel P1.

Chaque premier pixel P1 comprend un filtre interférentiel propre à transmettre seulement une première bande spectrale B1. Un filtre interférentiel (aussi appelé filtre dichroïque) est un filtre dont les propriétés de transmission et de réflexion dépendent de la longueur d'onde. Le filtre interférentiel est, par exemple, de type Fabry Pérot.

La première bande spectrale B1 est une bande spectrale d'intérêt centrée sur une longueur d'onde d'intérêt. La longueur d'onde d'intérêt est typiquement la longueur d'onde centrale de la bande spectrale du laser que l'on cherche à détecter.

Par exemple, la longueur d'onde d'intérêt appartient à l'infrarouge court, c'est-à-dire à la gamme de longueurs d'onde comprises entre 0,9 micromètres (µm) et 1,7 µm. Plus précisément, la longueur d'onde d'intérêt est comprise entre 1,05 µm et 1,07 µm et est avantageusement égale à 1,064 µm. Dans un autre exemple, la longueur d'onde d'intérêt est comprise entre 1,50 µm et 1,70 µm, de préférence entre 1,55 µm et 1,65 µm.

Chaque deuxième pixel P2 comprend un filtre propre à transmettre seulement une deuxième bande spectrale B2. Le filtre du deuxième pixel P2 est, par exemple, un filtre passe-haut.

La deuxième bande spectrale B2 est différente de la première bande spectrale B1. La deuxième bande spectrale B2 est une bande spectrale de référence. Une bande spectrale de référence permet de définir une référence d'éclairement localement ou de proche en proche pour chaque ensemble de pixels. La bande spectrale de référence est choisie dans le groupe constitué de :
- (i) : une bande spectrale centrée sur une longueur d'onde différente de la ou chaque longueur d'onde d'intérêt,
- (ii) : une bande spectrale disjointe de la ou chaque bande spectrale d'intérêt, et
- (iii) : une bande spectrale dans laquelle au moins une bande spectrale d'intérêt est strictement inclue.

De préférence, lorsque la bande spectrale de référence est du type (iii), la bande spectrale de référence est une bande spectrale large. Une bande spectrale large est définie comme étant une bande spectrale de largeur supérieure ou égale à 100 nm. Lorsque la bande spectrale de référence est du type (i) ou (ii), la bande spectrale de référence est une bande spectrale large ou une bande spectrale étroite. Une bande spectrale étroite est définie comme étant une bande spectrale de largeur inférieure à 100 nanomètres (nm).

Avantageusement, chaque ensemble comprend au moins un troisième pixel P3 parmi la pluralité de pixels du capteur 20. Le troisième pixel P3 est adjacent à au moins l'un du premier et du deuxième pixel P2 de l'ensemble.

Chaque troisième pixel P3 comprend un filtre propre à transmettre seulement une troisième bande spectrale B3.

La troisième bande spectrale B3 est différente de la première bande spectrale B1 et de la deuxième bande spectrale B2. La troisième bande spectrale B3 est une bande spectrale d'intérêt centrée sur une longueur d'onde d'intérêt.

En variante, la troisième bande spectrale B3 est une bande spectrale de référence différente de la deuxième bande spectrale B2.

Avantageusement, lorsque la troisième bande spectrale B3 est une bande spectrale d'intérêt, le filtre du troisième pixel P3 est un filtre interférentiel.

Avantageusement, chaque ensemble comprend une pluralité de pixels, tels que plusieurs premiers pixels P1 et/ou plusieurs deuxièmes pixels P2 et/ou plusieurs troisièmes pixels P3 et/ou des pixels différents des premier, deuxième et troisième pixels P1, P2, P3. Dans ce cas, chaque pixel comprend un filtre adapté à la bande spectrale correspondant au pixel. Lorsque chaque ensemble comprend des pixels différents des premier, deuxième et troisième pixels P1, P2, P3, les bandes spectrales desdits pixels P1, P2, P3 sont des bandes spectrales d'intérêt ou des bandes spectrales de référence.

La disposition des pixels de chaque ensemble est prédéfinie. Avantageusement, la disposition des pixels de chaque ensemble est identique d'un ensemble à un autre. Par exemple, la position des différents types de pixels sur le capteur 20 est choisie de sorte à former un motif périodique. Avantageusement, les différents types de pixels sont disposés les uns par rapport aux autres selon un dallage entrelacé.

Par exemple, les positions des premiers pixels sur le capteur 20 sont choisies de sorte à former un motif prédéfini (par exemple, un motif en quinconce) et la position des autres pixels, notamment des deuxièmes pixels, sont les positions non occupées par les premiers pixels (dans l'exemple, les vides du motif en quinconce).

Un exemple de disposition des premier, deuxième et troisième pixels P1, P2, P3 est illustré par la figure 6. Dans cet exemple, les deuxièmes pixels P2 (pixels de référence) sont disposés selon un motif périodique sur le capteur 20 et les premiers pixels P1 (pixel d'intérêt) et troisième pixels P3 (pixels d'intérêt ou de référence) sont disposés périodiquement dans les espaces non occupés par les premiers pixels.

Le calculateur 24 est propre à comparer, le cas échéant, les mesures réalisées par les pixels de chaque ensemble et à classifier l'impulsion optique en fonction du résultat de la comparaison. Par exemple, les résultats obtenus à l'issue de la comparaison sont comparés à une base de données de résultats obtenus pour des sources lumineuses connues, ce qui permet la classification de la source lumineuse à identifier.

Les comparaisons sont, par exemple, effectuées détection par détection, c'est-à-dire à chaque fois qu'un flux est reçu sur le capteur 20.

En variante, les comparaisons sont effectuées après plusieurs détections, par exemple après une durée supérieure à la durée d'un tir laser (de l'ordre de 1 seconde au maximum). Cela permet de faciliter la classification de la source lumineuse 11.

Le fonctionnement du dispositif de détection 14 selon le deuxième mode de réalisation va maintenant être décrit. Dans ce qui suit seules les différences de fonctionnement du dispositif de détection 14 par rapport au premier mode de réalisation sont mises en évidence.

Le capteur 20 reçoit une impulsion optique sous la forme d'une tâche T s'étalant sur au moins un ensemble de pixels du capteur 20.

En réponse, l'unité de mesure 35 de chaque pixel de l'ensemble recevant l'impulsion optique génère une mesure (à supposer qu'une variation ait été détecté par l'unité de détection 32 de chaque pixel).

Le calculateur 24 compare ensuite les mesures à un seuil prédéterminé de manière similaire au premier mode de fonctionnement.

Les mesures jugées valides (c'est-à-dire comme correspondants à des impulsions optiques différentes d'un simple bruit) sont ensuite comparées entre les pixels d'un même ensemble. Pour cela, le calculateur 24 calcule des ratios entre les mesures de chaque ensemble et compare, ensuite, les ratios obtenus à au moins une valeur prédéterminée pour classifier la source lumineuse 11 d'émission.

Dans l'exemple considéré, le calculateur 24 compare les mesures des première, deuxième et troisième pixels P1, P2, P3 de l'ensemble de pixels illuminés.

Par exemple, le calculateur 24 calcule les ratios entre les mesures obtenues pour les premier, deuxième et troisième pixels P1, P2, P3, ce qui revient à calculer les ratios entre les première, deuxième et troisième bandes spectrales B1, B2, B3. Par exemple, lorsque la première et la troisième bande spectrale B1, B3 sont des bandes spectrales d'intérêt et la deuxième bande spectrale B2 est une bande spectrale de référence, les ratios calculés sont, d'une part, le ratio B1/B2 entre la première bande spectrale B1 (d'intérêt) et la deuxième bande spectrale B2 (de référence) et, d'autre part, le ratio B3/B2 entre la troisième bande spectrale B3 (d'intérêt) et la deuxième bande spectrale B2 (de référence).

Ces ratios sont ensuite comparés à des valeurs prédéterminées, ce qui permet de déterminer si la source d'émission est une source laser centrée sur la longueur d'onde d'intérêt ou une source large bande. Avantageusement, l'estimation de la température équivalente de la source lumineuse 11 permet de classifier plus précisément la source. Par exemple, des températures équivalentes de l'ordre de 5800 Kelvins (K) permettront de rejeter un reflet solaire. Des températures inférieures à 2000 K permettront de classifier des feux de bouche ou des propulsions de roquettes ou de missiles.

Dans une variante de mise en oeuvre, l'unité de mesure 35 ne permet pas de mesurer des variations de flux. Cela est notamment le cas lorsque l'impulsion reçue est très brève. Dans ce cas, en réponse à la réception d'une impulsion optique, la connaissance des pixels ayant détectés l'impulsion optique permet de classifier la source d'émission. Par exemple, lorsque chacun des pixels d'intérêt (P1, P3) et de référence (P2) d'un ensemble a détecté une impulsion optique, l'émission est considérée être en provenance d'un reflet solaire. Lorsque seuls le premier pixel d'intérêt P1 et le pixel de référence P2 d'un ensemble ont détecté une impulsion optique, l'émission est considérée être en provenance d'une source laser centré sur une longueur d'onde comprise dans la première bande spectrale B1. Lorsque seuls le troisième pixel d'intérêt P3 et le pixel de référence P2 d'un ensemble ont détecté une impulsion optique, l'émission est considérée être en provenance d'une source laser centré sur une longueur d'onde comprise dans la troisième bande spectrale B3.

Ainsi, outre les avantages du premier mode de réalisation, le dispositif de détection 14 selon le deuxième mode de réalisation permet par la comparaison de ratios, ou plus simplement par la comparaison des pixels d'un ensemble ayant effectué une détection,de distinguer des émissions lasers (notamment dans le court infra-rouge) de reflets solaires, ce qui permet de réduire le taux de fausses alarmes. En particulier, dans le cas d'un détecteur d'alerte laser matriciel, le taux de fausses alarmes est réduit pour la détection de flux laser émis, par exemple, par des télémètres multi-impulsionnels, des désignateurs laser, des illuminateurs d'imageurs actifs ou autres.

Le capteur 20 du dispositif de détection 14 étant un capteur matriciel, une localisation angulaire précise de la source d'émission est également possible. En outre, un tel capteur matriciel permet de réaliser deux fonctions : une fonction de détection (permettant de classifier la source d'émission) et une fonction d'imagerie.

De plus, les pixels correspondants aux bandes spectrales de référence permettent de définir une référence locale d'éclairement de la scène. En particulier, de jour, le flux solaire moyen réfléchi par la scène est pris en compte.

Ainsi, le dispositif de détection 14 permet de détecter de manière fiable des impulsions de courtes durée, notamment lasers et de les localiser précisément tout en rejetant les sources de fausse alarme potentielle (comme les reflets solaires par exemple) sur des critères temporels (notamment lorsque les durées des impulsions sont différentes des durées recherchées).

## Revendications

1. Dispositif (14) de détection d'impulsions optiques, avantageusement d'impulsions laser, chaque impulsion optique ayant une largeur d'impulsion, le dispositif (14) comprenant un capteur (20) comportant une pluralité de pixels, chaque pixel comprenant :
- un récepteur (30) configuré pour recevoir des impulsions optiques et pour générer un signal électrique ayant des variations représentatives des impulsions optiques reçues, chaque variation du signal électrique ayant une fréquence dans le domaine fréquentiel dépendant de la largeur d'impulsion de l'impulsion correspondant à ladite variation,
- une unité de détection d'événements (32) comprenant au moins un filtre fréquentiel, le ou au moins un filtre fréquentiel ayant au moins une fréquence de coupure (f1, f2) réglable, la fréquence de coupure (f1, f2) de chaque filtre définissant une bande passante pour l'unité de détection d'événements (32), la bande passante ayant une borne inférieure et une borne supérieure, la fréquence de coupure (f1, f2) réglable du ou chaque filtre étant réglée de sorte que la borne supérieure est supérieure ou égale à 1 Mégahertz, l'unité de détection d'événements (32) étant configurée pour détecter au cours du temps les variations dans le signal électrique généré par le récepteur (30) seulement lorsque la fréquence dans le domaine fréquentiel desdites variations est comprise dans la bande passante de l'unité de détection d'événements (32), et
- une unité de chronométrie (34) configurée pour dater chaque variation du signal électrique détectée par l'unité de détection d'événements (32).

2. Dispositif (14) selon la revendication 1, dans lequel la ou chaque fréquence de coupure réglable est réglée en fonction d'une tension de réglage appliquée au filtre fréquentiel correspondant, le réglage étant avantageusement effectué lors de la conception du dispositif de détection (14).

3. Dispositif (14) selon la revendication 2, dans lequel chaque unité de détection d'événements (32) comprend au moins un filtre fréquentiel passe-bas à une première fréquence de coupure (f1) réglable et un filtre fréquentiel passe-haut à une deuxième fréquence de coupure (f2) réglable, les tensions de réglage appliquées à chaque filtre étant telles que la première fréquence de coupure (f1) soit la borne supérieure de la bande passante de l'unité de détection d'événements (32) et la deuxième fréquence de coupure (f2) soit la borne inférieure de la bande passante de l'unité de détection d'événements (32).

4. Dispositif (14) selon l'une quelconque des revendications 1 à 3, dans lequel, pour chaque pixel, la fréquence de coupure (f1, f2) réglable du ou chaque filtre de l'unité de détection d'évènements (32) est réglé de sorte que la borne inférieure de la bande passante est supérieure ou égale à 100 kilohertz, de préférence supérieure ou égale à 1 Mégahertz.

5. Dispositif (14) selon l'une quelconque des revendications 1 à 4, dans lequel le récepteur (30) est configuré pour générer un signal électrique seulement lorsque la longueur d'onde des impulsions optiques reçues est comprise entre 380 nanomètres et 1,7 micromètres.

6. Dispositif (14) selon l'une quelconque des revendications 1 à 5, dans lequel le dispositif (14) comprend au moins un filtre spectral (40) en amont du capteur (20), le filtre spectral étant centré sur une longueur d'onde d'intérêt, avantageusement le filtre spectral (40) ayant une fenêtre de transmission de largeur supérieure ou égale à 30 nanomètres ou supérieure ou égale à 100 nanomètres.

7. Dispositif (14) selon l'une quelconque des revendications 1 à 6, dans lequel chaque impulsion optique est reçue sur le capteur (20) sous la forme d'une tâche (T), le dispositif (14) comprenant une unité de contrôle de la taille et de la forme de la tâche (T) de sorte que la tâche (T) s'étende sur au moins deux pixels adjacents du capteur (20), avantageusement sur au moins quatre pixels adjacents du capteur (20), chaque pixel comprenant une unité de mesure (35) des variations du signal électrique détectées par l'unité de détection d'événements (32) correspondante, le dispositif (14) comprenant, en outre, un calculateur (24) configuré pour, le cas échéant, comparer la mesure effectuée par l'unité de mesure (35) de chaque pixel sur lequel s'étend la tâche (T) à un seuil prédéterminé et déterminer si l'impulsion optique reçue est ou non un bruit de mesure en fonction du résultat de la comparaison.

8. Dispositif (14) selon l'une quelconque des revendications 1 à 7, dans lequel chaque impulsion optique est reçue sur le capteur (20) sous la forme d'une tâche (T), le dispositif (14) comprenant une unité de contrôle de la taille et de la forme de la tâche (T) de sorte que la tâche (T) s'étende sur au moins deux pixels adjacents du capteur (20), avantageusement sur au moins quatre pixels adjacents du capteur (20), chaque pixel comprenant une unité de mesure (35) des variations du signal électrique détectées par l'unité de détection d'événements (32) correspondante, les pixels du capteur (20) étant regroupés en ensemble, chaque ensemble comprenant au moins un premier pixel (P1) et un deuxième pixel (P2), adjacent au premier pixel (P1), chaque premier pixel (P1) comprenant un filtre interférentiel propre à transmettre seulement une première bande spectrale (B1), la première bande spectrale (B1) étant une bande spectrale d'intérêt centrée sur une longueur d'onde d'intérêt, chaque deuxième pixel (P2) comprenant un filtre propre à transmettre seulement une deuxième bande spectrale (B2), la deuxième bande spectrale (B2) étant différente de la première bande spectrale (B1), la deuxième bande spectrale (B2) étant une bande spectrale de référence choisie dans le groupe constitué de :
- une bande spectrale centrée sur une longueur d'onde différente de la ou chaque longueur d'onde d'intérêt,
- une bande spectrale disjointe de la ou chaque bande spectrale d'intérêt, et
- une bande spectrale dans laquelle au moins une bande spectrale d'intérêt est strictement inclue,
le dispositif (14) comprenant un calculateur propre à comparer, le cas échéant, les mesures réalisées par l'unité de mesure (35) de chacun du premier et du deuxième pixel (P1, P2) et à classifier l'impulsion optique reçue en fonction du résultat de la comparaison.

9. Dispositif (14) selon la revendication 6 ou 8, dans lequel au moins une longueur d'onde d'intérêt est comprise entre 1,05 micromètres et 1,07 micromètres ou entre 1,50 micromètres et 1,70 micromètres, de préférence entre 1,55 micromètres et 1,65 micromètres.

10. Système optronique comprenant un dispositif de détection (14) selon l'une quelconque des revendications 1 à 9.

## Patentansprüche

1. Vorrichtung (14) zum Erfassen von optischen Impulsen, vorteilhafterweise von Laserimpulsen, wobei jeder optische Impuls eine Impulsbreite aufweist, die Vorrichtung (14) umfassend einen Sensor (20), umfassend eine Vielzahl von Pixeln, jedes Pixel umfassend:
- einen Empfänger (30), der konfiguriert ist, um optische Impulse zu empfangen und ein elektrisches Signal mit Variationen zu erzeugen, die repräsentativ für die empfangenen optischen Impulse sind, wobei jede Variation des elektrischen Signals eine Frequenz in dem Frequenzbereich aufweist, die von der Impulsbreite des Impulses abhängt, der der Variation entspricht,
- eine Ereigniserfassungseinheit (32), umfassend mindestens einen Frequenzfilter, wobei der oder der mindestens eine Frequenzfilter mindestens eine einstellbare Grenzfrequenz (f1, f2) aufweist, wobei die Grenzfrequenz (f1, f2) von jedem Filter eine Bandbreite für die Ereigniserfassungseinheit (32) definiert, wobei die Bandbreite eine untere und eine obere Grenze aufweist, wobei die einstellbare Grenzfrequenz (f1, f2) des oder von jedem Filter eingestellt wird, sodass die obere Grenze größer als oder gleich wie 1 Megahertz ist, wobei die Ereigniserfassungseinheit (32) konfiguriert ist, um im Lauf der Zeit die Variationen in dem von dem Empfänger (30) erzeugten elektrischen Signal nur dann zu erfassen, wenn die Frequenz in dem Frequenzbereich der Variationen innerhalb der Bandbreite der Ereigniserfassungseinheit (32) liegt, und
- eine Zeitmesseinheit (34), die konfiguriert ist, um jede Variation des elektrischen Signals, die von der Ereigniserfassungseinheit (32) erfasst wird, zu datieren.

2. Vorrichtung (14) nach Anspruch 1, wobei die oder jede einstellbare Grenzfrequenz abhängig von einer Einstellspannung eingestellt wird, die an den entsprechenden Frequenzfilter angelegt wird, wobei die Einstellung vorteilhafterweise bei der Auslegung der Erfassungsvorrichtung (14) vorgenommen wird.

3. Vorrichtung (14) nach Anspruch 2, wobei jede Ereigniserfassungseinheit (32) mindestens einen Tiefpass-Frequenzfilter mit einer ersten einstellbaren Grenzfrequenz (f1) und einen Hochpass-Frequenzfilter mit einer zweiten einstellbaren Grenzfrequenz (f2) umfasst, wobei die an jeden Filter angelegten Einstellspannungen derart sind, dass die erste Grenzfrequenz (f1) die obere Grenze der Bandbreite der Ereigniserfassungseinheit (32) ist und die zweite Grenzfrequenz (f2) die untere Grenze der Bandbreite der Ereigniserfassungseinheit (32) ist.

4. Vorrichtung (14) nach einem der Ansprüche 1 bis 3, wobei die einstellbare Grenzfrequenz (f1, f2) von dem oder von jedem Filter der Ereigniserfassungseinheit (32) für jedes Pixel eingestellt ist, sodass die untere Grenze der Bandbreite größer als oder gleich wie 100 Kilohertz, vorzugsweise größer als oder gleich wie 1 Megahertz, ist.

5. Vorrichtung (14) nach einem der Ansprüche 1 bis 4, wobei der Empfänger (30) konfiguriert ist, um nur dann ein elektrisches Signal zu erzeugen, wenn die Wellenlänge der empfangenen optischen Impulse zwischen 380 Nanometern und 1,7 Mikrometern liegt.

6. Vorrichtung (14) nach einem der Ansprüche 1 bis 5, wobei die Vorrichtung (14) mindestens einen Spektralfilter (40) stromaufwärts von dem Sensor (20) umfasst, wobei der Spektralfilter auf eine Wellenlänge von Interesse zentriert ist, wobei der Spektralfilter (40) vorteilhafterweise ein Transmissionsfenster mit einer Breite von größer als oder gleich wie 30 Nanometer oder größer als oder gleich wie 100 Nanometer aufweist.

7. Vorrichtung (14) nach einem der Ansprüche 1 bis 6, wobei jeder optische Impuls in Form eines Flecks (T) an dem Sensor (20) empfangen wird, die Vorrichtung (14) umfassend eine Steuereinheit der Größe und Form des Flecks (T), sodass sich der Fleck (T) über mindestens zwei angrenzende Pixel des Sensors (20), vorteilhafterweise über mindestens vier angrenzende Pixel des Sensors (20), erstreckt, jedes Pixel umfassend eine Messeinheit (35) von Variationen des elektrischen Signals, die von der entsprechenden Ereigniserfassungseinheit (32) erfasst werden, die Vorrichtung (14) ferner umfassend einen Rechner (24), der konfiguriert ist, um gegebenenfalls die von der Messeinheit (35) vorgenommene Messung von jedem Pixel, über das sich der Fleck (T) erstreckt, mit einem vorbestimmten Schwellenwert zu vergleichen und abhängig von dem Resultat des Vergleichs zu bestimmen, ob der empfangene optische Impuls ein Messrauschen ist.

8. Vorrichtung (14) nach einem der Ansprüche 1 bis 7, wobei jeder optische Impuls in Form eines Flecks (T) an dem Sensor (20) empfangen wird, die Vorrichtung (14) umfassend eine Steuereinheit der Größe und Form des Flecks (T), sodass sich der Fleck (T) über mindestens zwei angrenzende Pixel des Sensors (20), vorteilhafterweise über mindestens vier angrenzende Pixel des Sensors (20), erstreckt, jedes Pixel umfassend eine Messeinheit (35) von Variationen des elektrischen Signals, die von der entsprechenden Ereigniserfassungseinheit (32) erfasst werden, wobei die Pixel des Sensors (20) zu einem Satz zusammengefasst sind, jeder Satz umfassend mindestens ein erstes Pixel (P1) und ein zweites Pixel (P2) angrenzend an das erste Pixel (P1), jedes erste Pixel (P1) umfassend einen Interferenzfilter, der geeignet ist, um nur ein erstes Spektralband (B1) zu übertragen, wobei das erste Spektralband (B1) ein Spektralband von Interesse ist, das auf eine Wellenlänge von Interesse zentriert ist, jedes zweite Pixel (P2) umfassend einen Filter, der geeignet ist, um nur ein zweites Spektralband (B2) zu übertragen, wobei sich das zweite Spektralband (B2) von dem ersten Spektralband (B1) unterscheidet, wobei das zweite Spektralband (B2) ein Referenzspektralband ist, ausgewählt aus der Gruppe, bestehend aus:
- einem Spektralband, das auf eine Wellenlänge zentriert ist, die sich von der oder jeder Wellenlänge von Interesse unterscheidet,
- einem Spektralband, das von dem oder jedem Spektralband von Interesse getrennt ist, und
- einem Spektralband, in dem mindestens ein Spektralband von Interesse strikt beinhaltet ist,
die Vorrichtung (14) umfassend einen Rechner, der geeignet ist, um gegebenenfalls die von der Messeinheit (35) durchgeführten Messungen von jedem von dem ersten und dem zweiten Pixel (P1, P2) zu vergleichen und den empfangenen optischen Impuls abhängig von dem Resultat des Vergleichs zu klassifizieren.

9. Vorrichtung (14) nach Anspruch 6 oder 8, wobei mindestens eine Wellenlänge von Interesse zwischen 1,05 Mikrometer und 1,07 Mikrometer oder zwischen 1,50 Mikrometer und 1,70 Mikrometer, vorzugsweise zwischen 1,55 Mikrometer und 1,65 Mikrometer, liegt.

10. Optronisches System, umfassend eine Erfassungsvorrichtung (14) nach einem der Ansprüche 1 bis 9.

## Claims

1. A device (14) for detecting optical pulses, advantageously laser pulses, each optical pulse having a pulse width, the device (14) comprising a sensor (20) having a plurality of pixels, each pixel comprising:
- a receiver (30) configured to receive optical pulses and to generate an electrical signal having variations representative of the received optical pulses, each variation of the electrical signal having a frequency in the frequency domain dependent on the pulse width of the pulse corresponding to said variation,
- an event detection unit (32) comprising at least one frequency filter, the or at least one frequency filter having at least one adjustable cut-off frequency (f1, f2), the cut-off frequency (f1, f2) of each filter defining a passband for the event detection unit (32), the passband having a lower bound and an upper bound, the adjustable cut-off frequency (f1, f2) of the or each filter being set so that the upper bound is greater than or equal to 1 Megahertz, the event detection unit (32) being configured to detect over time variations in the electrical signal generated by the receiver (30) only when the frequency in the frequency domain of said variations is within the passband of the event detection unit (32), and
- a timing unit (34) configured to date each change in the electrical signal detected by the event detection unit (32).

2. The device (14) according to claim 1, wherein the or each adjustable cut-off frequency is adjusted in accordance with an adjustment voltage applied to the corresponding frequency filter, the adjustment being advantageously carried out during the design of the detection device (14).

3. The device (14) according to claim 2, wherein each event detection unit (32) comprises at least one low-pass frequency filter with a first adjustable cut-off frequency (f1) and a high-pass frequency filter with a second adjustable cut-off frequency (f2), the setting voltages applied to each filter being such that the first cut-off frequency (f1) is the upper bound of the passband of the event detection unit (32) and the second cut-off frequency (f2) is the lower bound of the passband of the event detection unit (32).

4. The device (14) according to any one of claims 1 to 3, wherein, for each pixel, the adjustable cut-off frequency (f1, f2) of the or each filter of the event detection unit (32) is set so that the lower bound of the passband is greater than or equal to 100 kilohertz, preferably greater than or equal to 1 megahertz.

5. The device (14) according to any one of claims 1 to 4, wherein the receiver (30) is configured to generate an electrical signal only when the wavelength of the received optical pulses is between 380 nanometres and 1.7 micrometres.

6. The device (14) according to any one of claims 1 to 5, wherein the device (14) comprises at least one spectral filter (40) upstream of the sensor (20), the spectral filter being centred on a wavelength of interest, advantageously the spectral filter (40) having a transmission window of width greater than or equal to 30 nanometres or greater than or equal to 100 nanometres.

7. The device (14) according to any one of claims 1 to 6, wherein each optical pulse is received on the sensor (20) in the form of a spot (T), the device (14) comprising a unit for controlling the size and shape of the spot (T) so that the spot (T) extends over at least two adjacent pixels of the sensor (20), advantageously over at least four adjacent pixels of the sensor (20), each pixel comprising a unit (35) for measuring variations in the electrical signal detected by the corresponding event detection unit (32), the device (14) further comprising a computer (24) configured to, if necessary, compare the measurement taken by the measurement unit (35) of each pixel over which the spot (T) extends with a predetermined threshold and determine whether or not the received optical pulse is measurement noise depending on the result of the comparison.

8. The device (14) according to any one of claims 1 to 7, wherein each optical pulse is received on the sensor (20) as a spot (T), the device (14) comprising a unit for controlling the size and shape of the spot (T) so that the spot (T) extends over at least two adjacent pixels of the sensor (20), advantageously over at least four adjacent pixels of the sensor (20), each pixel comprising a unit (35) for measuring variations in the electrical signal detected by the corresponding event detection unit (32), the pixels of the sensor (20) being grouped into sets, each set comprising at least a first pixel (P1) and a second pixel (P2) adjacent to the first pixel (P1), each first pixel (P1) comprising an interference filter adapted to transmit only a first spectral band (B1), the first spectral band (B1) being a spectral band of interest centred on a wavelength of interest, each second pixel (P2) comprising a filter adapted to transmit only a second spectral band (B2), the second spectral band (B2) being different from the first spectral band (B1), the second spectral band (B2) being a reference spectral band selected from the group consisting of:
- a spectral band centred on a different wavelength from the or each wavelength of interest,
- a spectral band disjoint from the or each spectral band of interest, and
- a spectral band in which at least one spectral band of interest is strictly included,
the device (14) comprising a computer adapted to compare, if necessary, the measurements made by the measuring unit (35) of each of the first and second pixels (P1, P2) and to classify the received optical pulse according to the result of the comparison.

9. The device (14) according to claim 6 or 8, wherein at least one wavelength of interest is between 1.05 microns and 1.07 microns or between 1.50 microns and 1.70 microns, preferably between 1.55 microns and 1.65 microns.

10. An optronic system comprising a detection device (14) according to any of claims 1 to 9.
